# EUROPEAN PATENT APPLICATION

(11) **EP 2 842 872 A1**
(43) Date of publication of application: **04.03.2015**
(21) Application number: 14183288.1
(22) Date of filing: 02.09.2014
(51) Int. Cl.: B64D 13/06, F02C 6/08

(54) **Bleed air system**

(30) Priority: 03.09.2013 US 201361872912 P
(71) Applicant: Hamilton Sundstrand Corporation, Windsor Locks, CT 06096-1010 (US)
(72) Inventor: Bruno, Louis J., Ellington, CT Connecticut 06029 (US)
(74) Representative: Leckey, David Herbert

(57) **Abstract**

A bleed system comprises a bleed inter-compressor (106) fluidly coupled to a low pressure port (102) of the bleed system and configured to utilize a portion of a medium received from the low pressure port (102) to increase the pressure of another portion of that medium. A turbine (222) of the bleed inter-compressor (106) is coupled to a compressor (220) of the bleed inter-compressor (106) and drives the compressor (220) via a shaft (223), so as to regulate the pressure of the medium.

## Description

### BACKGROUND OF THE INVENTION

An environmental control system supplies pressurized air to any environment, such as a cabin and flight deck of an aircraft, for both comfort and pressurization. The air supplied by the environmental control system may originate from a compressor stage of an engine (e.g., via a bleed air system) and/or directly from exterior air (e.g., via a ram air system). The interaction of the environmental control system with the engine influences how much fuel is burnt by the engine.

For example, in a bleed air system of an aircraft, air is extracted from an engine core at different stage locations (e.g., a high pressure port and a low pressure port). The selection of the low pressure port is based on high altitude, hot day flight conditions, which results in a pressure from the engine on other day types and lower altitudes higher than required. When the air is at a higher pressure than required, the engine has a higher fuel burn than necessary.

### BRIEF DESCRIPTION OF THE INVENTION

According to one embodiment, a turbo compressor is added to a low pressure port of a bleed system to provide a required pressure.

Additional features and advantages are realized through the techniques of the present invention. Other embodiments and aspects of the invention are described in detail herein and are considered a part of the claimed invention. For a better understanding of the invention with the advantages and the features, refer to the description and to the drawings.

### BRIEF DESCRIPTION OF THE DRAWINGS

The subject matter which is regarded as the invention is particularly pointed out and distinctly claimed in the claims at the conclusion of the specification. The forgoing and other features, and advantages of the invention are apparent from the following detailed description taken in conjunction with the accompanying drawings in which:
Figure 1 is a block diagram of a bleed system that includes a turbo compressor according to one embodiment; and
Figure 2 is a schematic diagram of a turbo compressor of a bleed system according to one embodiment.

### DETAILED DESCRIPTION OF THE INVENTION

A detailed description of one or more embodiments of the disclosed apparatus and method are presented herein by way of exemplification and not limitation with reference to the Figures.

As indicated above, the selection of the low pressure port is based on hot day high altitude flight condition and results in unnecessary fuel by the engine. Thus, what is needed is a bleed inter compressor that enables a bleed system to take advantage of a lower pressure port of an engine, while the aircraft is at the lower altitudes and/or flying in cooler temperatures, by boosting bleed-air above a final pressure before the bleed-air is passed onto an environmental control system.

In general, embodiments of the present invention disclosed herein may include a bleed system, comprising a high pressure circuit fluidly coupled a high pressure portion of an engine and configured to bleed a medium from the high pressure portion; a low pressure port fluidly coupled to a low pressure portion of the engine and configured to bleed the medium from the low pressure portion, wherein the medium includes a first set of properties when being bled by the low pressure port, the first set of properties comprising a pressure; and a bleed inter-compressor fluidly coupled to the low pressure port and configured to utilize a portion of the medium received from the low pressure port to increase the pressure.

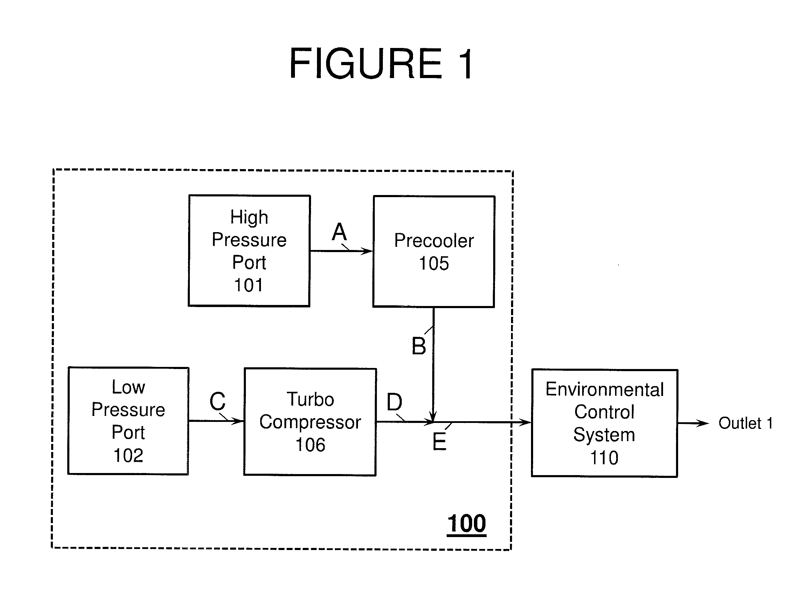

Figure 1 illustrates a bleed system 100, which is an arrangement where a medium (e.g., air) is "bled" from at least one compressor stage of an engine. The bleed system 100 comprise a high pressure port 101, a low pressure port 102, a precooler 105, and a turbo compressor 106 (e.g., an bleed inter-compressor), each of which are fluidly coupled via tubes, pipes, and the like, such that a medium is from the engine may be received at an initial flow rate, pressure, and temperature from either of the ports 101, 102 and provided as intermediate flow rate, pressure, and temperature.

An engine or engine core is a machine designed to convert energy into useful mechanical motion. Engine cores may utilize multiple stages to increase gains during the conversion of energy. Examples of an engine core include, but are not limited to, gas turbine, reciprocating, steam, jet, turbo-propeller, and pulse detonation engines.

The high pressure port 101 and the low pressure port 102 are access points to different compression stages of the engine. In general, the bleed system 100 bleeds the medium from the high pressure port 101 and/or the low pressure port 102 of an engine core in accordance with an operation state of a vehicle associated with the engine. In turn, because the bleed system 100 is in fluid communication with the environmental control system 110, the medium is passed to the vehicle so that a constant environmental state of the vehicle is maintained through all operations states.

For example, on an aircraft, air is supplied to an environmental control system by being "bled" from a compressor stage of a gas turbine engine, upstream of a combustor. The temperature and pressure of this "bleed-air" varies widely depending upon which compressor stage and a revolutions per minute of the gas turbine engine.

That is, air may be bled from a high compression stage of a gas turbine engine when the operation state of the aircraft is landing or taxiing (e.g., the engine is throttled down as less thrust is needed during these operation states). Further, air may be bled from a low compression stage of the gas turbine engine when the operation state of the aircraft is take-off or cruising at standard altitudes (e.g., the engine is throttled up as more thrust is needed during these operation states). By bleeding air from different compression stages of the gas turbine engine, a cabin pressure (e.g., environmental state) of the aircraft is efficiently maintained by the environmental control system at a target level regardless of the operation state.

As illustrated in Figure 1, when bled (e.g., Arrow A) from the high pressure port 101, the medium is passed through the precooler 105 to (e.g., Arrows B, E) the environmental control system 110. That is, because the medium is of a high temperature (e.g., above 400°F (204.4°C)) when bled from the high pressure port 101, the precooler 105 cools the medium, thereby lowering the temperature, to a suitable level for further processing by the environmental control system 110.

Heat exchangers (e.g., a precooler 105) are equipment built for efficient heat transfer from one medium to another. Examples of heat exchangers include double pipe, shell and tube, plate, plate and shell, adiabatic wheel, plate fin, pillow plate, and fluid heat exchangers. Continuing with the aircraft example above, air forced by a fan (e.g., via push or pull methods) is blown across the heat exchanger at a variable cooling airflow to control the final air temperature of the bleed-air.

Further, when bled (e.g., Arrow C) from the low pressure port 102, the medium is passed through the turbo compressor 106. In turn, the turbo compressor 106 boosts the pressure of the medium as it exits the low pressure port 102, so that the medium is received (e.g., Arrows D, E) at a suitable level for further processing by the environmental control system 110 (e.g., a higher pressure the initially bled from the low pressure port 102). Thus, the turbo compressor 106 may regulate a pressure of the medium (e.g., air) flowing before the medium is supplied to the environmental control system 110.

A compressor (e.g., the turbo compressor 106 and/or the bleed inter-compressor) or fan is a mechanical device that pressurizes a medium (e.g., increasing the pressure of a gas by reducing its volume). Examples of a compressor include centrifugal, diagonal or mixed-flow, axial-flow, reciprocating, ionic liquid piston, rotary screw, rotary vane, scroll, diaphragm, air bubble compressors. Further, compressors are typically driven by an electric motor or a steam or a gas turbine.

An environmental control system (e.g., the environmental control system 110) of a vehicle, such as an aircraft or watercraft, provides air supply, thermal control, and cabin pressurization for a crew and passengers of the vehicle. The system may also include avionics cooling, smoke detection, and fire suppression. In Figure 1, once the environmental control system 110 receives (e.g., Arrow E) the medium from bleed air system 100, the bleed air is processed and supplied to the Outlet 1 at a final flow rate, pressure, and temperature (e.g., processed and supplied to the cabin of an aircraft at 14.6 psia (100.7 kPa)).

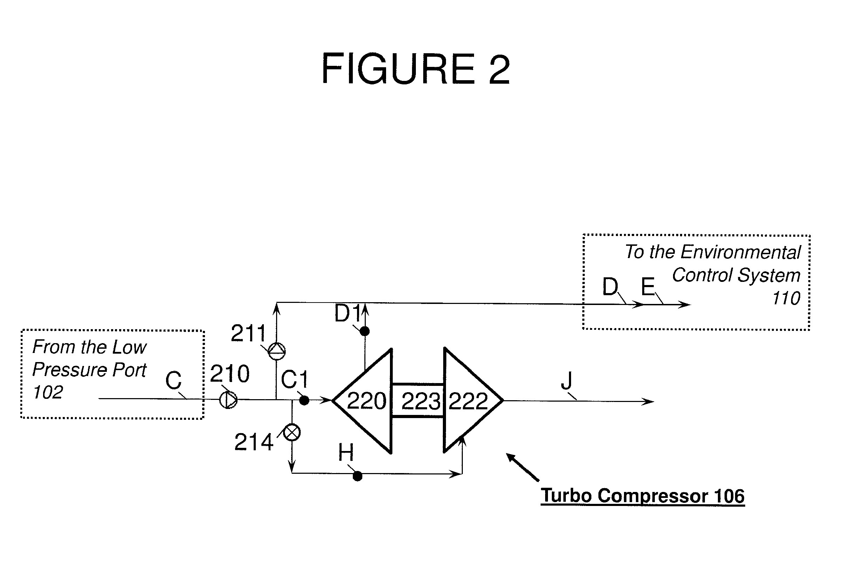

The system of Figure 1 will now be described with reference to Figure 2. Figure 2 is a schematic diagram of a turbo compressor 106 within a bleed system according to one embodiment. Figure 2 includes check valves 210, 211, a flow valve 214, and a compressor 220, a turbine 222, and a shaft 223, e.g., which combine to form the turbo compressor 106. The items of Figure 2 are connected via tubes, pipes, and the like, such that the medium is accepted the low pressure port 102 at the initial flow rate, pressure, and temperature and provided to the environmental control system 110 at the final flow rate, pressure, and temperature (e.g., from a first pressure to a second pressure that is higher than the first pressure).

For example, utilizing the aircraft example, properties of the bleed-air (e.g., the final flow rate, pressure, and temperature at the Outlet 1) enable the cabin of the aircraft to receive pressurized and cooled air during operation states that utilize the low compression stage (e.g., port 102) at a lower fuel cost due to the addition of turbo compressor (e.g., turbo compressor 106).

Valves, such as the check valves 210, 211 and the flow valve 214, are devices that regulate, direct, and/or control a flow of a medium (e.g., gases, liquids, fluidized solids, or slurries, such as bleed-air) by opening, closing, or partially obstructing various passageways within the tubes, pipes, etc. of the cabin air conditioning system 200. Valves may be operated by actuators such that the flow rates of any medium in any portion of the bleed system 100 may be regulated to a desired value.

In operation, the check valve 210 prevents reverse flow to the low pressure port 102. The check valve 211 prevents recirculation of air to a compressor inlet. The flow value 214 supplies a portion of the medium to the turbine 222.

The compressor 220 is a mechanical device that raises the pressure of the medium received from the check valve 210 (e.g., a pressure of the medium flowing from the low pressure location to the environmental control system). For instance, the compressor 220 is coupled to the low pressure port 102 of the bleed system 100 and configured to compress the medium received from the low pressure port 102 by the compressor 220 via the check valve 210.

The turbine 222 is coupled to the compressor and configured to drive the compressor 220 via the shaft 223 to regulate the pressure of the medium. For instance, a portion of the medium is retrieved via the flow valve 214 (e.g., located upstream from the turbo compressor) and utilized by the turbine to drive the compressor 220, after which the portion of the medium as an exhaust may be supplied to another component and/or system. That is, the fan stream, which includes the exhaust from the turbine 222, may be supplied to a heat exchanger in communication with the turbine 222. In the aircraft example, thrust may be recovered by dumping the exhaust, thereby reducing the need for ram air and increasing the fuel efficiency of the aircraft.

Figure 2 will now be described in view of the aircraft example above. Bleeding air from a low pressure port 102 causes less of a fuel burn than bleeding air from a high pressure location. The compressor 220 is employed to ensure that the bleed-air is boosted above the final pressure before being passed onto the environmental control system 110 (e.g., thus, the first pressure of the bleed-air is regulated properly to the final pressure). To assist in further explanation of a pressure management by the compressor 220, Figure 2 includes demarcation points C1, D1, H that itemize properties of the bleed-air (e.g., the medium) at that point in the bleed system 100. The properties include a change in flow-rate, a pressure, and a temperature.

In Figure 2, the bleed-air is supplied from the low pressure port 102 through the check valve 210, where before it arrives at the compressor 222 it includes a first flow-rate, a first pressure, and a first temperature(demarcation point C1). Then, before the bleed-air is passed to the compressor 222, some of the flow rate is regulated by the flow valve 214 such that a portion of the bleed-air is supplied to the turbine 222 while the rest of the bleed-air goes through the compressor 222. For example, the first flow rate is regulated by the flow valve 214 so that the turbine 222 is powered by a portion of the bleed-air at a second flow-rate, a second pressure, and a second temperature (demarcation point H).

When the turbine 222 receives the portion of the bleed-air regulated by the flow valve 214, the turbine 222 drive the compressor 220 via the shaft 223 to pressurize the bleed-air based on the force applied from the shaft 223. In this example, the resulting properties of the bleed-air after pressurization are a third flow-rate, a third pressure, and a third temperature (demarcation point D1), where the third pressure is greater than the first pressure. In addition, once the portion of the bleed-air that was supplied to the turbine 222 is utilized by the turbine 222, that portion of the bleed-air proceeds to exit the turbine 222 (e.g., as indicated by Arrow J) and may proceed overboard or be utilized the aircraft (e.g., such as by entering the fan stream). Thus, the turbo compressor 106 enables, during the lower altitudes and/or the cooler temperatures, a pressure management method of providing the bleed-air by fluidly coupling the low pressure port 102 of the bleed system 100 to the compressor 220, fluidly coupling an output of the compressor 220 to the environmental control system 110, mechanically coupling the turbine 222 via the shaft 223 to the compressor 220; utilizing, by the turbine 222, the portion of the medium to drive the compressor 220; and pressurizing, by the compressor 220, the medium flowing from the low pressure port 102 to the environmental control system 100 from a first pressure (demarcation point C1) to a second pressure (demarcation point D1).

Aspects of the present invention are described herein with reference to flowchart illustrations, schematics, and/or block diagrams of methods, apparatus, and/or systems according to embodiments of the invention. Further, the descriptions of the various embodiments of the present invention have been presented for purposes of illustration, but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one more other features, integers, steps, operations, element components, and/or groups thereof.

The flow diagrams depicted herein are just one example. There may be many variations to this diagram or the steps (or operations) described therein without departing from the spirit of the invention. For instance, the steps may be performed in a differing order or steps may be added, deleted or modified. All of these variations are considered a part of the claimed invention.

While the preferred embodiment to the invention had been described, it will be understood that those skilled in the art, both now and in the future, may make various improvements and enhancements which fall within the scope of the claims which follow. These claims should be construed to maintain the proper protection for the invention first described.

## Claims

1. A bleed system, comprising:
a high pressure circuit fluidly coupled a high pressure portion of an engine and configured to bleed a medium from the high pressure portion;
a low pressure port (102) fluidly coupled to a low pressure portion of the engine and configured to bleed the medium from the low pressure portion, wherein the medium includes a first set of properties when being bled by the low pressure port (102), the first set of properties comprising a pressure; and
a bleed inter-compressor (106) fluidly coupled to the low pressure port (102) and configured to utilize a portion of the medium received from the low pressure port (102) to increase the pressure.

2. The bleed system of claim 1, wherein the bleed inter-compressor (106) is independent of a heat exchanger (105) of the high pressure circuit.

3. The bleed system of claim 1 or 2, wherein the bleed inter-compressor (106) is configured to:
receive the portion of the medium via a flow valve (214) from the low pressure port (102), and
receive a second portion of the medium via a check valve (210) from the low pressure port (102).

4. The bleed system of any preceding claim, wherein the bleed system is in communication with an environmental control system (110), and
wherein the low pressure port (102) is a low pressure location of an engine core.

5. The bleed system of any preceding claim, wherein the bleed inter-compressor (106) comprises a compressor (220), a shaft (223), and a turbine (222), and is configured to utilize the turbine (222) to drive the compressor (220) via the shaft (223) to increase the pressure of the medium.

6. The bleed system of any preceding claim, wherein the portion of the medium is utilized to power a or the turbine (222) of the bleed inter-compressor (106), and
wherein a or the compressor (220) of the bleed inter-compressor (106) increases the pressure of the medium with respect to the power of the turbine (222).

7. The bleed system of any preceding claim, wherein the bleed system is a bleed air system of an aircraft, and
wherein the medium is air.

8. A turbo compressor (106) of a bleed air system of an aircraft, in communication with a low pressure location of an engine core and an environmental control system (110), configured to regulate a pressure of air flowing from the low pressure location to the environmental control system (110) based on a power generated by a portion of the air.

9. The turbo compressor of claim 8, wherein the turbo compressor is independent of a heat exchanger (105) of a high pressure circuit of the bleed air system.

10. The turbo compressor of claim 8 or 9, wherein the pressure of the air flowing from the low pressure location to the environmental control system (110) is regulated from a first pressure to a second pressure that is higher than the first pressure.

11. The turbo compressor of any of claims 8 to 10, comprises:
a shaft (223);
a compressor fan (220); and
a turbine (222) that drives the compressor (220) via the shaft to regulate the pressure of the medium in accordance with the power generated by the portion of the air.
